# EUROPEAN PATENT APPLICATION

(11) **EP 2 107 460 A1**
(43) Date of publication of application: **07.10.2009**
(21) Application number: 08290334.5
(22) Date of filing: 04.04.2008
(51) Int. Cl.: G06F 9/445

(54) **Method for improving native library and native application compatibily**

(71) Applicant: Alcatel Lucent, 75008 Paris (FR)
(72) Inventor: Liekens, Werner, 2580 Sint-Katelijne-Waver (BE); Stevens, Christoph, 9190 Stekene (BE); Justen, Pascal, 1150 Brussel (BE); Coppens, Jan, 9000 Gent (BE); Acke, Willem, 2820 Rijmenam (BE); van Leeuwen, Tom, 9000 Gent (BE); Vermoesen, Luc, 2880 Bornheim (BE)
(74) Representative: D'Halleweyn, Nele Veerle Trees Gertrudis

(57) **Abstract**

A method is described for automatically configuring a device, the functioning of which is based on an OSGi^{™} service platform, the OSGi service platform being remotely managed by a remote management server comprising an automatic configuration server as defined in TR-069 of the DSL Forum adapted and arranged for automatically configuring the device using the remote management protocol TR-069 as defined by the DSL Forum, wherein it comprises:
a. installing an OSGI Bundle on the OSGi service platform, adapted for retrieving native application and/or native library information of the device;
b. scanning said OSGi platform for native applications and/or libraries, hereby retrieving native application and/or native library information;
c. forwarding the native application and/or native library information to the automatic configuration server (ACS);
d. analysing of the native application and/or native library information by the ACS;
e. installing an application on the device by the automatic configuration server, taking into account the native application and/or native library information.

## Description

### Technical field of the invention

The present invention relates to the field of the deployment of extensible and downloadable applications within the framework of the Open Services Gateway initiative (OSGi™). It relates to methods for automatically configuring a device, the functioning of which is based on an OSGi™ platform and which communicates with a means for automatically configuring the device.

### Background of the invention

Founded in March 1999, the OSGi™ Alliance (Open Service Gateway initiative) specifies, creates, advances and promotes wide industry adoption of an open service delivery and management platform. The OSGi™ technology is designed to ease the development of new services and applications for the latest generation of networked devices. Adding an OSGi™ service platform to a device, enables managing the life cycle of the software components in the device from anywhere in the network. Software components can be installed, updated or removed on the fly without having to disrupt the operation of the device. The OSGi™ service platform is a Java based service platform running on top of a Java Virtual Machine (JVM) residing in the device, and can be remotely managed. The core part of the specifications is a framework that defines an application life cycle model and a service registry. Based on this framework, a large number of OSGi™ Services have been defined.

The DSL Forum is an international industry consortium of service providers, equipment and component manufacturers and other interested parties, focussing on developing broadband DSL. The DSL Forum develops technical specifications and indirectly standards that enable delivery of DSL products and services. More information about the DSL Forum is available from its internet site http://www.dslforum.org.

One of the technical specifications of the DSL forum is Technical report TR-069 (e.g. issue 1, amendment 2, dating from December 2007 [also referred to as version v1.1 for the purpose of this description]), specifying the CPE WAN Management Protocol (also referred to as CWMP or TR-069). The TR-069 Management Protocol and corresponding network architectures allow communication between a device (Customer Premises Equipment, CPE) and an automatic configuration server (ACS). It defines a mechanism that encompasses secure auto-configuration of a CPE, and also incorporates other CPE management functions into a common framework.

When an automatic configuration server installs a new OSGi bundle on a Customer Premises Equipment (CPE), the platform is performing dependency checking towards other bundles. If missing dependencies would exist, the installation of the Bundle would fail. Therefore, dependency checking can be done on the server-side (ACS) by checking the importing and exporting description in the bundle manifest-file.

A problem in the state of the art is though that no information on native libraries, which are installed on the client-side, is available to the ACS. Without this information, a successful installation of a bundle cannot be guaranteed and installation errors may occur.

In the prior art this problem is solved by embedding the native library in an OSGi bundle and installing it on the CPE, but this still carries the risk that the native library is already installed on the platform. This may cause problems during the installation of bundles and/or applications as for instance ports may already have been reserved by the native library and may not be accessible anymore by the to be installed bundles and/or applications.

### Summary of the invention

For the purpose of the present invention, the following terminology has been used, corresponding, unless mentioned otherwise, with the terminology of the TR-069 specification. The term "Device" is used in its ordinary sense and not as in TR-069. The CPE is TR-069 can thus be seen as an example of a device for the purpose of the present description.
- ACS: Auto-Configuration Server: this is a component in the broadband network responsible for auto-configuration of the CPE for advanced services. The ACS can also be used for lifecycle management of the services deployed on the CPE. (It is to be noted that a collection of ACSs behind a load balancer is considered a single ACS for the purposes of this description.)
- CPE Customer Premises Equipment; an example of a device present at the customer premises. It preferably refers to any TR-069-compliant (or CWMP compliant) device and therefore covers both Internet Gateway Devices and LAN-side end devices.
- CWMP: CPE WAN Management Protocol (the subject of the standard TR-069)."

It is though to be noted that the terminology may be applicable in a broader context than the specific TR-069 context.

The DSL forum's Technical report TR-069 (e.g. issue 1, amendment 2, dating from December 2007, also referred to as version v1.1 for the purpose of this description) is hereby incorporated by reference.

The OSGi™ Service Platform Core Specification, Release 4, Version 4.1 of April 2007, is hereby also incorporated by reference.

When terms as "first", "second", "third" and the like are used, this does not necessarily mean that a sequential or that a chronological order is to be assumed.

The term "comprising", should be interpreted as such that it does not exclude other elements or steps.

A method for automatically configuring a device, the functioning of which is based on an OSGi™ service platform, the OSGi service platform being remotely managed by a remote management server comprising an automatic configuration server as defined in TR-069 of the DSL Forum adapted and arranged for automatically configuring the device using the remote management protocol TR-069 as defined by the DSL Forum is disclosed, that comprises:
a. installing an OSGI Bundle on the OSGi service platform, adapted for retrieving native application and/or native library information of the device;
b. scanning the OSGi platform for native applications and/or libraries, hereby retrieving the native application and/or native library information;
c. forwarding the native application and/or native library information to the automatic configuration server (ACS);
d. analysing the native application and/or native library information by the ACS;
e. installing an application on the device by the automatic configuration server, taking into account the native application and/or native library information.

A native application is an application designed to run in the computer environment (machine language and OS) being referenced. The term is used to contrast a native application with an interpreted one such as a Java application that is not native to a single platform.

Native libraries are platform-specific library files, including .dll, .so, or *SRVPGM objects. Native libraries are visible to an application class loader whenever the shared library is associated with an application. Similarly, native libraries are visible to an application server class loader whenever the shared library is associated with an application server.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Certain embodiments of the present invention further comprise installing appropriate libraries and/or necessary applications if no relevant native applications and/or libraries are found, before installing the application. The necessary applications are applications which are needed in order to properly install the application and to have it running properly.

Certain embodiments of the present invention further comprise informing the user of the device of the incorrect version of the libraries and/or applications, such that the user can install the appropriate version of the libraries and/of necessary applications before installing the application.

According to certain embodiments of the present invention the native application and/or native library information of the device further comprises information on the functions which are exported by the native libraries.

### Brief description of the drawings

The accompanying drawings are used to illustrate embodiments of the present invention.

In Fig. 1 a flow chart is shown which illustrates embodiments of the present invention.
Fig. 2 illustrates embodiments of the present invention as a function of the outcome of the data analysis process.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

According to embodiments of present invention, the use of a new OSGi bundle is proposed, having the functionalities of scanning the device (Customer Premises Equipment) for native applications and/or libraries and exporting the data of the native application and/or native library (version, methods, ...) to the associated Automatic Configuration Server (ACS). This new bundle is called "Native Library Bundle Exporter" for the purpose of the present description.

The ACS can then subsequently install a further OSGi application or bundle (e.g. X10 bundle), which can for instance be arranged and adapted to enable remote control of a device or apparatus (home automation control) in the home of the user (also referred to as home device or apparatus).

The new "Native Library Bundle Exporter" bundle is preferably arranged and/or adapted for getting the native library and/or native application information related to providing serial access to devices in the home. Typically such information can be present in the "librxtxSerial.so" file, and may be necessary for enabling serial communication with the devices in the home.

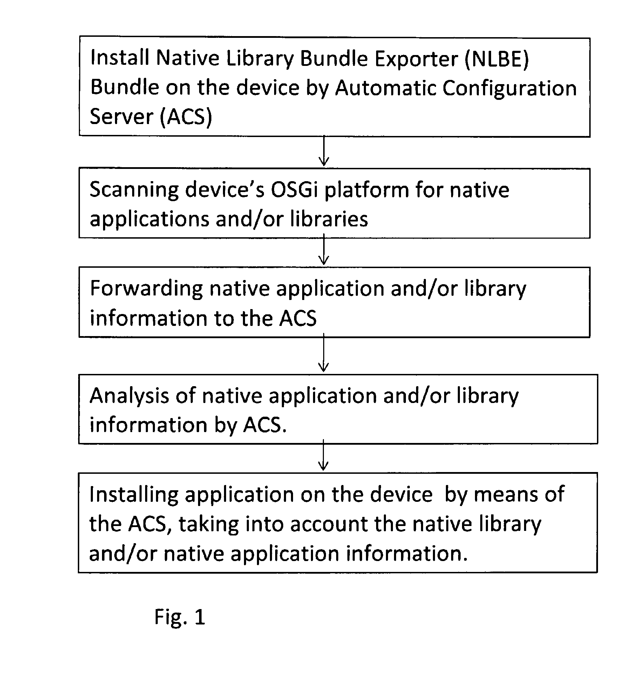

This can be performed as follows (see also Fig. 1):
- the ACS downloads and installs on the CPE, a module adapted for exporting the native library scanning bundle, the "Native Library Bundle Exporter";
- the "Native Library Bundle Exporter" scans the platform (CPE) for native libraries and/or applications and sends of forwards the native library information of data to the ACS.
- the ACS analyses the native library information or data received from the "Native Library Bundle Exporter".
- based on the native library information and the analysis there from, the ACS installs an application or bundle on the device, such that the installed application or bundle does not interfere with the native libraries and/or applications already present on the device.

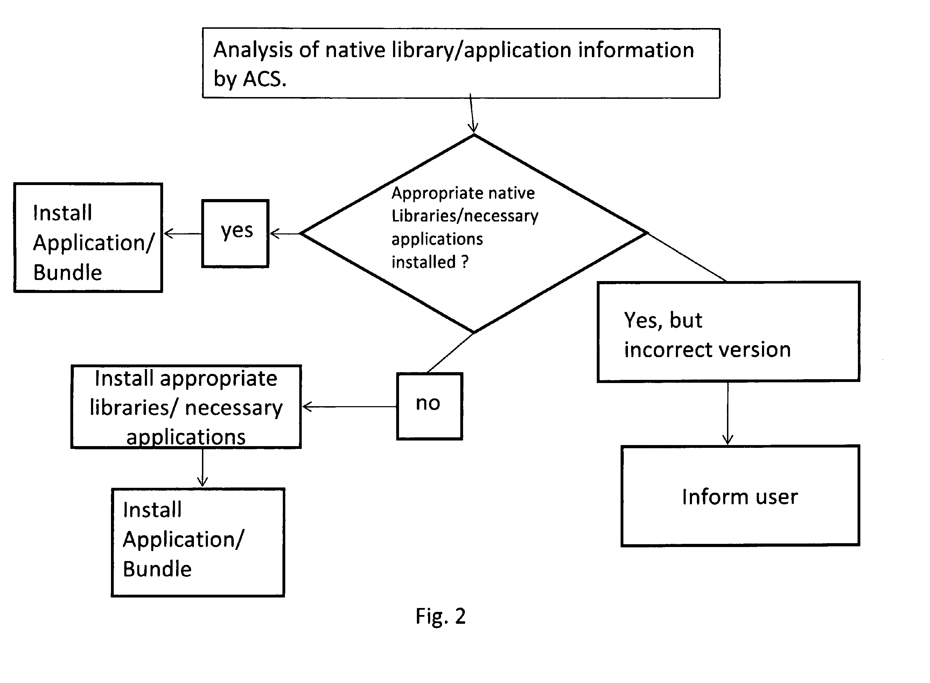

This is illustrated in Fig. 2. If it has been found that the native library and/or necessary applications was/were not already present on the device, a bundle comprising the native library and/or necessary applications can be installed first on the device, after which the application or bundle (e.g. X10 bundle) can be installed. If it was found that the required native libraries and/or applications was/were present in the correct version, the application or bundle (e.g. X10Bundle) can be installed.
If it has been found that the native library version is not correct, this can be reported to the user for manual intervention.

For a Linux OS, the native libraries can be retrieved by means of for instance the following actions:
- in the root directory of the file system, launch the command "find. -name *.so.*". A list of file names is then typically reported, as for example :
   /lib/libdb-4.3.so
   /lib/libc.so.6
   /usr/local/lib/librxtxSerial.so

It is to be noted that not only the filenames and version can be exported, but also the library's dependencies and exported functions.

For example in TR69:
- InternetGatewayDevice.Services.NativeBundle.1.name = librxtxSerial.so
- InternetGatewayDevice.Services.NativeBundle.1.version = 1.0
- InternetGatewayDevice.Services.NativeBundle.1.installPath = /usr/local/lib
- ...

According to further embodiments of the present invention, the "Native Library Bundle Exporter" can export the native library functions as OSGI services. This can be done by scanning the platform for native libraries, and performing an in-depth scan to the functions it exports for other users. For all native libraries that are found, a bundle is generated that wraps the native libraries. The generated bundle then exports the functions/services to the OSGI platform of the device, such that the device is aware of the native libraries installed on the platform.

The embodiments according to the present invention have the advantage that installation problems at customer side e.g. (CPE or Gateway) due to interference between already installed libraries and/or applications with newly added libraries and/or applications are avoided or reduced.

While the principles of the invention have been set out above in connection with specific embodiments, it is to be clearly understood that this description is merely made by way of example and not as a limitation of the scope of protection which is determined by the appended claims.

## Claims

1. A method for automatically configuring a device, the functioning of which is based on an OSGi™ service platform, said OSGi service platform being remotely managed by a remote management server comprising an automatic configuration server as defined in TR-069 of the DSL Forum adapted and arranged for automatically configuring said device using the remote management protocol TR-069 as defined by the DSL Forum, **characterised in that** in comprises:
a. installing an OSGI Bundle on said OSGi service platform, adapted for retrieving native application and/or native library information of said device;
b. scanning said OSGi platform for native applications and/or libraries, hereby retrieving said native application and/or native library information;
c. forwarding said native application and/or native library information to said automatic configuration server (ACS);
d. analysing of said native application and/or native library information by said ACS;
e. installing an application on said device by said automatic configuration server, taking into account said native application and/or native library information.

2. A method according to claim 1, further comprising installing appropriate libraries and/or necessary applications if no relevant native applications and/or libraries are found, before installing said application.

3. A method according to claim 1, further comprising informing the user of said device of the incorrect version of said libraries and/or applications, such that said user can install the appropriate version of said libraries and/of necessary applications before installing said application.

4. A method according to claim 1, wherein said native application and/or native library information of said device comprises information on the functions which are exported by said native libraries.
